# EUROPEAN PATENT SPECIFICATION

(11) **EP 2 451 133 B1**
(45) Date of publication and mention of the grant of the patent: **27.04.2016**
(21) Application number: 10788631.9
(22) Date of filing: 22.03.2010
(51) Int. Cl.: H04W 12/04, H04L 29/06

(54) **METHOD AND SYSTEM FOR TRANSMITTING DELAY MEDIA INFORMATION IN IP MULTIMEDIA SUBSYSTEM**
VERFAHREN UND SYSTEM ZUR ÜBERTRAGUNG VON VERZÖGERUNGSINFORMATIONEN IN EINEM IP MULTIMEDIA SUBSYSTEM
PROCÉDÉ ET SYSTÈME DESTINÉS À TRANSMETTRE DES INFORMATIONS MULTIMÉDIAS DE RETARD DANS UN IP SOUS-SYSTÈME MULTIMÉDIA

(30) Priority: 29.06.2009 CN 200910151034
(43) Date of publication of application: 09.05.2012
(73) Proprietor: ZTE Corporation, Shenzhen, Guangdong 518057 (CN)
(72) Inventor: ZHU, Yunwen, Shenzhen Guangdong 518057 (CN); TIAN, Tian, Shenzhen Guangdong 518057 (CN); WEI, Yinxing, Shenzhen Guangdong 518057 (CN); TENG, Zhimeng, Shenzhen Guangdong 518057 (CN)
(74) Representative: Bongiovanni, Simone
(86) International application number: PCT/CN2010/071185
(87) International publication number: WO 2010/145235

(56) References cited:
- WO-A1-2009/070075
- CN-A- 101 005 359
- CN-A- 101 252 577
- Menezes, Vanstone, Oorschot: "Handbook of Applied Cryptography", 1997, CRC Press LLC, USA, XP002715560, * page 490 - page 491 * * page 498 - page 499 * * page 546 - page 553 *

## Description

### Field of the Invention

The present invention relates to the communication field, in particular to a method and a system for transmitting delay media information in an IP (Internet Protocol) multimedia subsystem.

### Background of the Invention

In a technology specification of a media security of an IMS (IP multimedia subsystem), security requirement of transmitting delay media information to a media mailbox of a receiving party is proposed. This occurs generally in the case that a sending party (referred to as user A) sends media information to a receiving party (referred to as user B), while the user B is currently in an offline state (many reasons will result in the offline of user B, for example, user B is powered off, user B does not log in, or user B is not in a service area, etc..). Because user B is unreachable, a key negotiation mechanism for both parties being online can not be used in this case. Therefore, a KMS (key management server) must be introduced as a credible third party to realize that the both communication parties acquire a shared media key in an asynchronous manner.

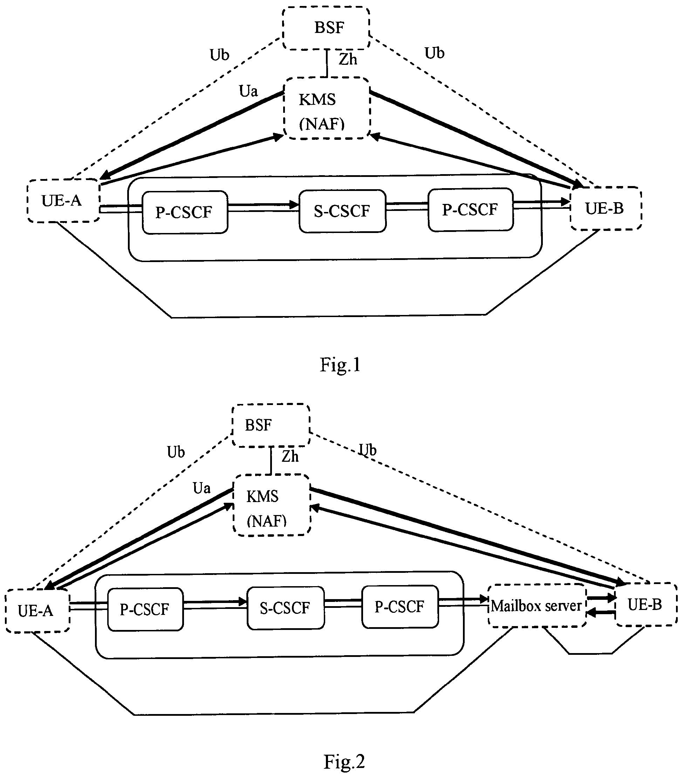

Fig.1 is a schematic diagram showing the architecture of the security solution for an IMS media based on the KMS in the prior art, wherein:
user A (UE-A) and user B (UE-B) respectively are the sending party and the receiving party of the media information;
the KMS realizes the functions of key management and distribution as a credible third party;
a P-CSCF (proxy-call session control function) and an S-CSCF (service-call session control function) are network elements of the IMS network.

Reference is made to related document for the detail of other network elements in Fig.1.

Fig.2 is a schematic diagram showing the architecture of the security solution for IMS delay media based on the KMS in the prior art. Compared with Fig.1, in Fig.2, a mailbox server (also referred to as mailbox application server) is introduced. When the architecture of Fig.2 is employed to realize the transmission of the IMS delay media information, UE-A firstly sends the media information to the mailbox server of UE-B through the IMS network, and UE-B can acquire the media information from the mailbox server of UE-B after logging in.

The specific solution for performing key negotiation and assignment by employing the architecture of Fig.2 will be described. The solution comprises two parts, wherein the first part is that when the receiving party (UE-B) of the media information is offline, the sending party (UE-A) of media information interacts with the mailbox server of UE-B to acquire the media key; and the second part is that UE-B acquires the media key from the KMS after logging in. The specific flows are respectively shown in Fig.3 and Fig.4.

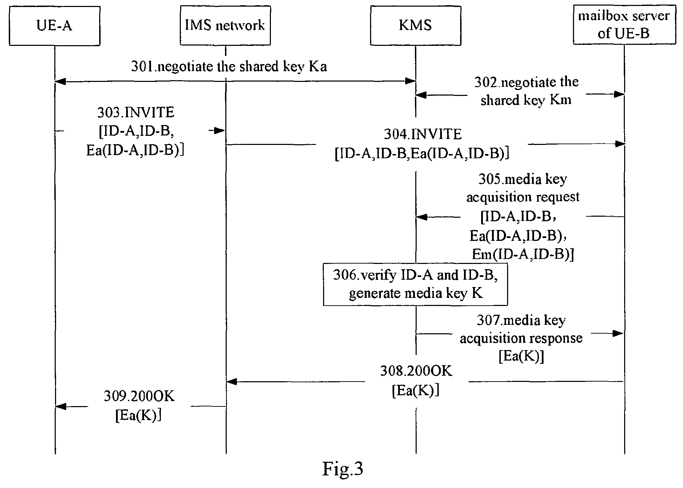

Fig.3 is the flow chart of the method for key negotiation between the sending party (UE-A) of the media information and the mailbox server of the receiving party (UE-B) of the media information based on the KMS. After the flow is ended, UE-A acquires the media key for encrypting the media information. For the purpose of simplicity, the random number required for preventing a replay attack is omitted in the flow shown in Fig.3. As shown in Fig.3, the method comprises steps as follows.

Step 301: UE-A and the KMS employ GBA (General Bootstrapping Architecture) to negotiate with each other to acquire a shared key Ka.

If the GBA manner can not be employed, UE-A can employ other bootstrapping (authentication) manners to negotiate with the KMS to acquire the shared key Ka.

Step 302, the mailbox server of UE-B and the KMS can employ manners such as GBA, TLS (Transport Layer Security), IPSec (Internet Protocol Security), etc. to negotiate with each other to acquire a shared key Km

Step 303, UE-A sends a call request (INVITE message) to UE-B through the IMS network, wherein the call request contains the following parameters: ID-A (the identifier of UE-A), ID-B (the identifier of UE-B), and Ea (ID-A, ID-B).

In the above, Ea (ID-A, ID-B) is a cipher text acquired by encrypting ID-A, ID-B with the shared key Ka.

Step 304, the IMS network forwards the call request of UE-A to the mailbox server of UE-B.

Step 305, the mailbox server of UE-B sends a media key acquisition request to the KMS after receiving the call request from UE-A, wherein the request contains the following parameters: ID-A, ID-B, Ea(ID-A, ID-B), and Em (ID-A, ID-B).

In the above, Em (ID-A, ID-B) is the cipher text acquired by encrypting ID-A, ID-B with the shared key Km.

Step 306, the KMS decrypts Ea(ID-A, ID-B) and Em (ID-A, ID-B) respectively using Ka and Km, and verifies whether the decrypted ID-A and ID-B are consistent with the plain text of ID-A and ID-B, if they are consistent (authentication is passed), the KMS generates a media key K.

One media key can be uniquely generated by using the above media key K.

Step 307, the KMS acquires Ea(K) by encrypting the media key K with Ka, and sends a media key acquisition response containing Ea(K) to the mailbox server of UE-B.

Step 308, the mailbox server of UE-B sends, after receiving Ea(K), a call answer (200OK message) containing Ea(K) to UE-A.

Step 309, the IMS network sends the 200OK message containing Ea(K) to UE-A, and UE-A acquires the media key K by decrypting Ea(K).

After the above flow is ended, UE-A acquires the media key K, while the mailbox server of UE-B can not acquire the media key K, thus an end-to-end security is ensured.

After logging in, UE-B firstly needs to acquire from the mailbox server of UE-B the security parameters, which contains ID-A, ID-B and Ea(ID-A, ID-B), to acquire the delay media information from UE-A according to the above security parameters and further interact with the KMS to acquire the media key.

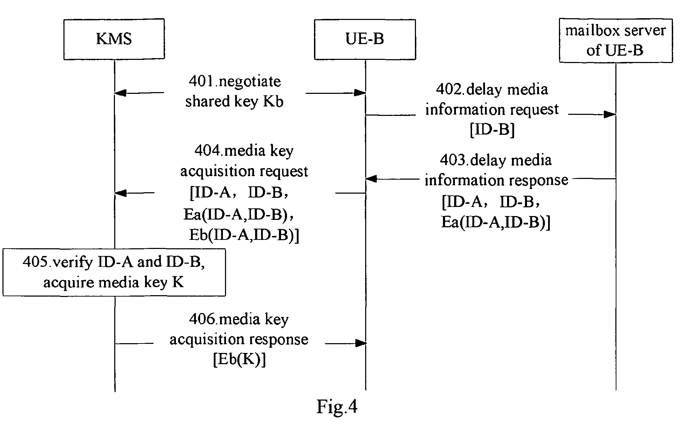

Fig.4 is the flow chart of the method in which the receiving party (UE-B) of the media information interacts with the mailbox server of the receiving party (UE-B) of the media information and the KMS to acquire the media key. After the flow is ended, UE-B can acquire the media key K. As shown in Fig.4, the method includes steps as follows.

Step 401, UE-B and the KMS employ the GBA to negotiate with each other to acquire a shared key Kb.

If the GBA manner can not be employed, UE-B can employ other authentication manners to negotiate with the KMS to acquire the shared key Kb.

Step 402, UE-B sends to the mailbox server a delay media information request, which contains the identifier (ID-B) of UE-B.

Step 403, the mailbox server returns to UE-B a delay media information response, which contains security parameters as follows: ID-A, ID-B and Ea(ID-A, ID-B).

Step 404, UE-B sends a media key acquisition request to the KMS, wherein the request contains the following parameters: ID-A, ID-B, Ea(ID-A, ID-B), Eb(ID-A, ID-B).

In the above, Eb (ID-A, ID-B) is the cipher text acquired by encrypting ID-A, ID-B with the shared key Kb.

Step 405, the KMS respectively decrypts Ea(ID-A, ID-B) and Eb (ID-A, ID-B) with Ka and Kb, and verifies whether the decrypted ID-A and ID-B are consistent with the plain text of ID-A and ID-B, if they are consistent, the KMS retrieves the media key K generated in Step 306.

Step 406, the KMS acquires Eb(K) by encrypting the media key K with Kb and sends a media key acquisition response containing Eb(K) to UE-B.

Hereto, UE-B acquires the media key K, and can decrypt the encrypted media information acquired from the mailbox server by using the media key K, so that the end-to-end security can be realized.

It can be concluded from above description that the current IMS delay media solution has the following shortcomings:
(1) the KMS needs to store the media key generated by itself, which will result in a statefulness problem of the KMS (i.e., the problem that the KMS can not bear the excessive storage load);
(2) during the negotiation of the media key, there are not generated and issued the shared key of the mailbox server between UE-A and UE-B, and the shared key between UE-B and the mailbox server of UE-B, thus the mailbox server of UE-B, as an intermediate node, is easily subjected to a denial-of-service-attack.

The "Handbook of Applied Cryptography" by Menezes, Vanstone, Oorschot, 1997, CRC Press LLC, USA, XP002715560, at pages 546-552 discloses generating and distributing by a key management center a symmetric key under request from any of the parties involved in the construction of a secure communication, the existence of different kinds of secret keys, like transport keys (used to transport other symmetric keys in encrypted form) and data keys (used to encrypt the confidential information which needs to be transmitted), and the generation (derivation) of symmetric keys starting from some key generating parameters.

### Summary of the Invention

The present invention aims at overcoming the shortcoming of the prior art by providing a method and a system for transmitting delay media information in an IP multimedia subsystem, so that the KMS does not need to store and maintain the media key generated by the KMS, and a shared key between the sending party of the media information and the mailbox server of the receiving party of the media information can be generated during the media key negotiation procedure.

In order to solve the above problem, the present invention provides a method for transmitting delay media information in an IP multimedia subsystem, and the method includes:
a sending party of media information sending key generating parameters which are at least partly encrypted to a mailbox server of a receiving party of the media information, and the mailbox server storing the key generating parameters which are at least partly encrypted and sending the key generating parameters which are at least partly encrypted to a key management server (KMS);
the KMS decrypting, with a shared key Ka, parameter(s), which is encrypted with the Ka, in the key generating parameters which are at least partly encrypted and which are sent by the mailbox server, to acquire all the key generating parameters, generating a media key Ke2e and an integrity transmission key Ke2m by using all the key generating parameters acquired, sending the Ke2e and the Ke2m to the sending party, and sending the Ke2m to the mailbox server, wherein the Ka is the shared key between the sending party and the KMS;
the sending party sending media information encrypted with the Ke2e to the mailbox server by using the Ke2m;
the receiving party acquiring from the mailbox server the key generating parameters which are at least partly encrypted, and sending to the KMS the key generating parameters which are at least partly encrypted;
the KMS decrypting, with the Ka, parameter(s), which is encrypted with the Ka, in the key generating parameters which are at least partly encrypted and which are sent by the receiving party, to acquire all the key generating parameters, generating the Ke2e by using all the key generating parameters acquired, and sending the generated Ke2e to the receiving party; and
the receiving party acquiring from the mailbox server the media information which is encrypted with the Ke2e by the sending party, and decrypting the acquired media information with the Ke2e.

Above method can also include the following features:
after decrypting parameter(s), which is encrypted with the Ka, in the key generating parameters which are at least partly encrypted and which are sent by the mailbox server, to acquire all the key generating parameters, the KMS further generating an integrity transmission key Km2e by using all the key generating parameters, and sending the Km2e to the mailbox server;
after decrypting parameter(s), which is encrypted with the Ka, in the key generating parameters which are at least partly encrypted and which are sent by the receiving party to acquire all the key generating parameters, the KMS further generating the Km2e by using the key generating parameters, and sending the generated Km2e to the receiving party;
wherein the receiving party acquires, by using the Km2e, from the mailbox server the media information which is encrypted with the Ke2e by the sending party

Above method also includes the following features:
before the step of sending the Ke2e and the Ke2m to the sending party, the KMS encrypting the Ka with a private key Kkms, and sending the encrypted Ka to the mailbox server for storing;
when the receiving party acquiring from the mailbox server the key generating parameters which are at least partly encrypted and sending to the KMS the key generating parameters which are at least partly encrypted, the mailbox server also sending the encrypted Ka to the receiving party, and the receiving party sending the encrypted Ka to the KMS; and
the KMS decrypting, after receiving the encrypted Ka, the encrypted Ka with the Kkms to acquire the Ka.

Above method also includes the following features:
the sending party employs the following way to send the key generating parameters which are at least partly encrypted to the KMS: the sending party carries in a call request message the key generating parameters which are at least partly encrypted to send to the mailbox server the key generating parameters which are at least partly encrypted, wherein the call request message contains identifiers of the sending party and the receiving party; the mailbox server stores the key generating parameters which are at least partly encrypted, carries in a media key acquisition request message the key generating parameters which are at least partly encrypted to send to the KMS the key generating parameters which are at least partly encrypted, wherein the media key acquisition request message contains identifiers of the sending party, the receiving party and the mailbox server;

After receiving the media key acquisition request message the KMS verifies the identifiers of the sending party, the receiving party and the mailbox server, and generates the media key and the integrity transmission key only if the verification is passed.

Above method also includes the following features:
the KMS employs the following way to send the Ke2e and Ke2m to the sending party:
the KMS encrypting the Ke2e and Ke2m generated by the KMS with the Ka, and sending the encrypted Ke2e and Ke2m to the mailbox server;
the mailbox server carrying the encrypted Ke2e and Ke2m in a call answer message to send the encrypted Ke2e and Ke2m to the sending party; and
the sending party decrypting the encrypted Ke2e and Ke2m with the Ka to acquire the Ke2e and the Ke2m.

Above method also includes the following features. The parameter(s), which is encrypted with the Ka, in the key generating parameters which are at least partly encrypted comprises: a timestamp and/or a random number generated by the sending party

The present invention also provides a method for transmitting delay media information in an IP multimedia system, and the method includes:
a key management server (KMS) generating, after receiving a ticket acquisition request sent by a sending party of media information, a media key Ke2e and an integrity transmission key Ke2m, encrypting the Ke2e and the Ke2m with a shared key Ka between the KMS and the sending party, and sending a ticket and the Ke2e and Ke2m encrypted with the Ka to the receiving party, wherein the ticket contains the Ke2e and the Ke2m encrypted with a private key of the KMS;
the sending party sending the ticket to a mailbox server of a receiving party of the media information, the mailbox server storing the ticket and sending the ticket to the KMS; the KMS performing decryption with the private key to acquire the Ke2m contained in the ticket, and sending the acquired Ke2m to the mailbox server;
the sending party sending media information encrypted with the Ke2e to the mailbox server by using the Ke2m;
the receiving party acquiring the ticket from the mailbox server, and sending the acquired ticket to the KMS; the KMS performing decryption with the private key to acquire the Ke2e contained in the ticket, and sending the acquired Ke2e to the receiving party;
the receiving party acquiring from the mailbox server the media information encrypted with the Ke2e by the sending party, and decrypting the acquired media information with the Ke2e.

The above method also includes the following features:
before sending the ticket and the Ke2e and Ke2m encrypted with the Ka to the receiving party, the KMS generates an integrity transmission key Km2e, encrypts the Km2e with the private key and then carries the encrypted Km2e in the ticket;
after receiving the ticket sent from the mailbox server, the KMS performs decryption with the private key to acquire the Km2e contained in the ticket, and sends the acquired Km2e to the mailbox server;
after receiving the ticket sent by the receiving party, the KMS performs decryption with the private key to acquire the Km2e contained in the ticket, and sends the acquired Km2e to the receiving party;
wherein the receiving party acquires, by using the Km2e, from the mailbox server the media information encrypted with the Ke2e by the sending party

The present invention also provides a KMS of supporting a transmission of delay media information in an IP multimedia subsystem, and the KMS is configured to:
after receiving key generating parameters which are at least partly encrypted and which are sent by a mailbox server of a receiving party, decrypt, with a shared key Ka, parameter(s), which is encrypted with the Ka, in the key generating parameters which are at least partly encrypted, to acquire all the key generating parameters, generate a media key Ke2e and an integrity transmission key Ke2m by using all the key generating parameters acquired, send the Ke2e and the Ke2m to the sending party, and send the Ke2m to the mailbox server; and
after receiving the key generating parameters which are at least partly encrypted and which are sent by the receiving party, decrypt, with the Ka, parameter(s), which is encrypted with the Ka, in the key generating parameters which are at least partly encrypted, to acquire all the key generating parameters, generate the Ke2e by using all the key generating parameters acquired, and send the generated Ke2e to the receiving party;
wherein the Ka is the shared key between the sending party and the KMS.

The present invention also provides a system for transmitting delay media information in an IP multimedia subsystem, and the system includes: a sending party of media information, a receiving party of the media information, a key management server (KMS) and a mailbox server of the receiving party of the media information;
the sending party is configured to send key generating parameters to the mailbox server
the mailbox server is configured to store the key generating parameters and send the key generating parameters to the KMS;
the KMS is configured to, after receiving the key generating parameters which are sent by a mailbox server of a receiving party, decrypt, with a shared key Ka, parameter(s), which is encrypted with the Ka, in the key generating parameters, generate a media key Ke2e and an integrity transmission key Ke2m by using the key generating parameters, send the Ke2e and the Ke2m to the sending party, and send the Ke2m to the mailbox server, wherein the Ka is the shared key between the sending party and the KMS;
the sending party is also configured to send media information encrypted with the Ke2e to the mailbox server by using the Ke2m;
the receiving party is configured to acquire from the mailbox server the key generating parameters, and send the key generating parameters to the KMS;
the KMS is also configured to, after receiving the key generating parameters which are sent by the receiving party, decrypt, with the Ka, parameter(s), which is encrypted with the Ka, in the key generating parameters, generate the Ke2e by using the key generating parameters, and send the Ke2e to the receiving party;
the receiving party is also configured to acquire from the mailbox server the media information which is encrypted with the Ke2e by the sending party, and decrypt the acquired media information with the Ke2e.

The present invention also provides a KMS of supporting a transmission of delay media information in an IP multimedia subsystem, and the KMS is configured to:
after receiving a ticket acquisition request, generate a media key Ke2e and an integrity transmission key Ke2m, encrypt the Ke2e and the Ke2m with a shared key Ka between the KMS and a sending party, and send a ticket and the Ke2e and Ke2m encrypted with the Ka to the receiving party, wherein the ticket contains the Ke2e and the Ke2m encrypted with a private key of the KMS,
after receiving the ticket sent by the mailbox server, perform decryption with the private key to acquire the Ke2m contained in the ticket, and send the acquired Ke2m to the mailbox server; and
after receiving the ticket sent by the sending party, perform decryption with the private key to acquire the Ke2e contained in the ticket, and send the acquired Ke2e to the receiving party

The present invention also provides a system for transmitting delay media information in an IP multimedia subsystem, and the system includes: a sending party of media information, a receiving party of the media information, a key management server (KMS) and a mailbox server of the receiving party of the media information;
the sending party is configured to send a ticket acquisition request to the KMS;
the KMS is configured to, after receiving the ticket acquisition request, generate a media key Ke2e and an integrity transmission key Ke2m, encrypt the Ke2e and the Ke2m with a shared key Ka between the KMS and the sending party, and send a ticket and the Ke2e and Ke2m encrypted with the Ka to the receiving party, wherein the ticket contains the Ke2e and the Ke2m encrypted with a private key of the KMS;
the sending party is also configured to send the ticket to the mailbox server;
the mailbox server is configured to store the ticket and send the ticket to the KMS;
the KMS is also configured to, after receiving the ticket sent by the mailbox server, perform decryption with the private key to acquire the Ke2m contained in the ticket, and send the acquired Ke2m to the mailbox server;
the sending party is also configured to send media information encrypted with the Ke2e to the mailbox server by using the Ke2m;
the receiving party is configured to acquire the ticket from the mailbox server, and send the acquired ticket to the KMS;
the KMS is also configured to, after receiving the ticket sent by the sending party, perform decryption with the private key to acquire the Ke2e contained in the ticket, and send the acquired Ke2e to the receiving party;
the receiving party is also configured to acquire from the mailbox server the media information encrypted with the Ke2e by the sending party, and decrypt the acquired media information with the Ke2e.

In summery, compared with the prior art, the present invention establishes an end-to-end security association between the sending party and the receiving party of the media information to encrypt the media information between them, without any need for the KMS to store the media key; at the same time, the security association is also established between the sending party and the mailbox server of the receiving party, and between the mailbox server of the receiving party and the receiving party, to perform an integrity protection and a mutual authentication between them, thus the security transmission of the IMS delay media information can be realized.

### Brief Description of the Drawings

Fig.1 is a schematic diagram of an architecture of the security solution for an IMS media based on the KMS in the prior art;
Fig.2 is a schematic diagram of an architecture of the security solution for an IMS delay media based on the KMS in the prior art;
Fig.3 is a flow chart of the method for key negotiation, based on the KMS, between the sending party of the media information and the mailbox server of the receiving party;
Fig.4 is a flow chart of the method in which the receiving party of the media information interacts with the mailbox server of the receiving party and the KMS to acquire the media key;

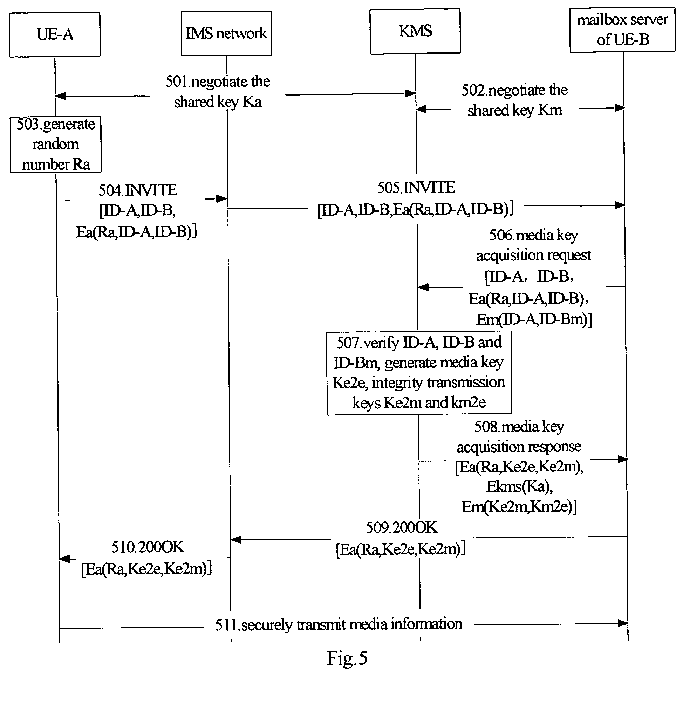

Fig.5 is a flow chart of the method for key negotiation, based on the KMS, between the sending party of the media information and the mailbox server of the receiving party according to the first embodiment of the present invention;

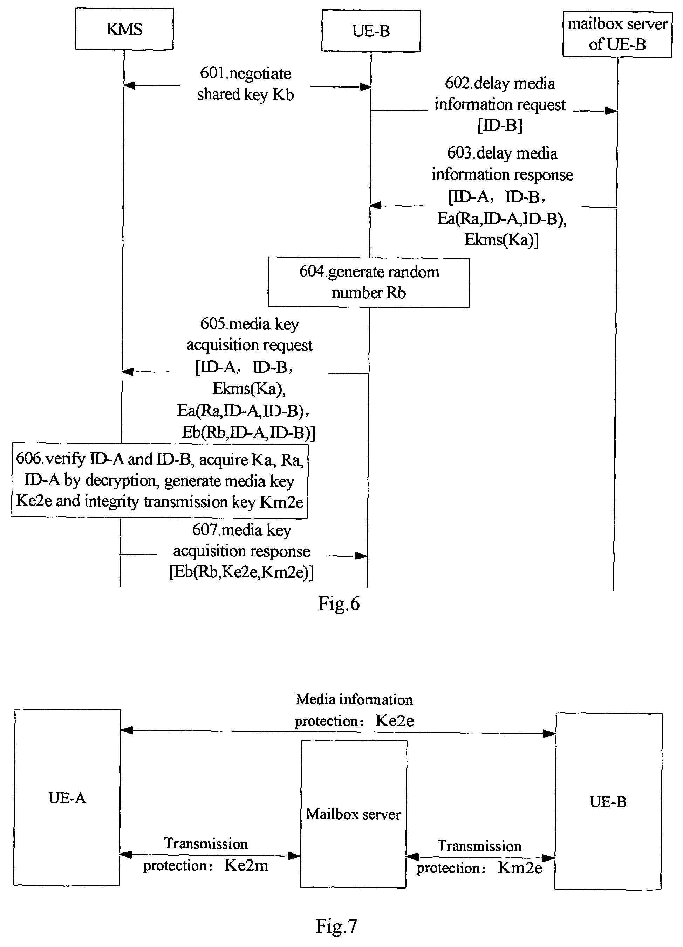

Fig.6 is a flow chart of the method according to the first embodiment of the present invention, in which the receiving party of the media information interacts with the mailbox server of the receiving party and the KMS to acquire the media key;
Fig.7 is a schematic diagram of the security association relationship among the sending party of the media information, the receiving party of the media information and the mailbox server of the receiving party of the media information;

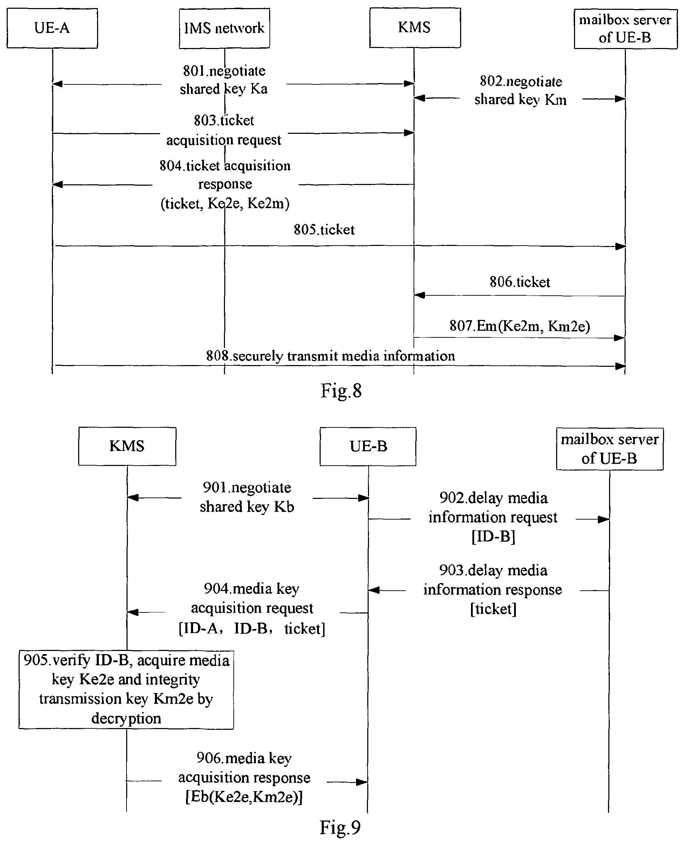

Fig.8 is a flow chart of the method for key negotiation, based on the KMS, between the sending party of the media information and the mailbox server of the receiving party according to the second embodiment of the present invention;
Fig.9 is a flow chart of the method according to the second embodiment of the present invention, in which the receiving party of the media information interacts with the mailbox server of the receiving party and the KMS to acquire the media key;

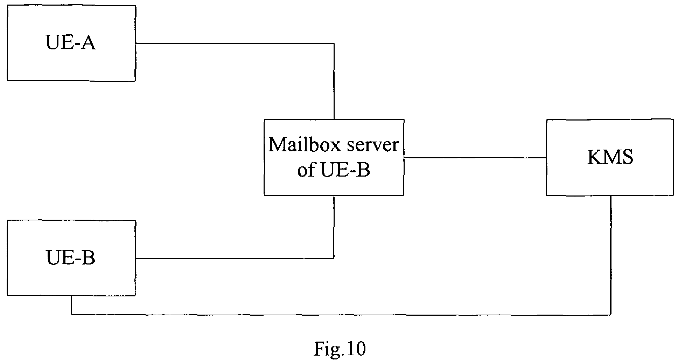

Fig.10 is a schematic diagram of the structure of the system for transmitting the delay media information in an IP multimedia subsystem according to an embodiment of the present invention.

### Detailed Description of the Embodiments

The core idea of the present invention is that when generating a media key material Ke2e shared by the sending party (UE-A) of the media information and the receiving party (UE-B) of the media information, the KMS also generates an integrity transmission key material Ke2m shared by UE-A and the mailbox server of UE-B, and an integrity transmission key material Km2e shared by UE-B and the mailbox server of UE-B, sends the Ke2m to UE-A and the mailbox server of UE-B, and sends the Km2e to UE-B and the mailbox server of UE-B.

The above media key material can be media key itself, or UE-A and UE-B can generate a same media key based on the above media key material and other parameters. Hereinafter, media key material and media key are indicated with a general name of media key.

Similarly, the above integrity transmission key material can be integrity transmission key itself, or UE-A/UE-B and the mailbox server of UE-B can generate a same media key based on the above integrity transmission key material and other parameters. Hereinafter, integrity transmission key material and integrity transmission key are indicated with a general name of integrity transmission key.

The present invention will be detailed in connection with drawings and embodiments.

### The First Embodiment

Fig.5 is the flow chart of the method of key negotiation, based on the KMS, between the sending party (UE-A) of the media information and the mailbox server of the receiving party (UE-B) of the media information according to the first embodiment of the present invention. After the flow is ended, UE-A acquires the media key Ke2e which is used for encrypting the media information, UE-A and the mailbox server of UE-B acquire the integrity transmission key Ke2m shared by the both parties, and the mailbox server of UE-B also acquires the integrity transmission key Km2e shared with UE-B. As shown in Fig.5, the method includes:
Step 501, UE-A and the KMS employ a GBA to negotiate to acquire a shared key Ka.

If the GBA manner can not be employed, UE-A can employ other bootstrapping (authentication) manners to negotiate with the KMS to acquire the shared key Ka.

Step 502, the mailbox server of UE-B and the KMS can employ manners such as GBA, TLS, IPSec, etc. to negotiate with each other to acquire a shared key Km

The sequential order of Step 501 and Step 502 is not limited.

Step 503, UE-A generates a random number Ra.

Step 504, UE-A sends a call request (for example, INVITE message) to UE-B through the IMS network, wherein the call request contains the following parameters: ID-A, ID-B, and Ea (Ra, ID-A, ID-B).

In the above, Ea(Ra, ID-A, ID-B) is a cipher text acquired by encrypting Ra, ID-A, and ID-B with the shared key Ka.

Step 505, the IMS network forwards the call request of UE-A to the mailbox server of UE-B.

Step 506, the mailbox server of UE-B sends a media key acquisition request to the KMS after receiving the call request from UE-A, wherein the request contains the following parameters: ID-A, ID-B, Ea(Ra, ID-A, ID-B), and Em (ID-A, ID-Bm).

In the above, ID-Bm is the identifier of the mailbox server of UE-B, Em (ID-A, ID-Bm) is a cipher text acquired by encrypting ID-A, ID-Bm with the shared key Km.

Step 507, the KMS decrypts Ea(Ra, ID-A, ID-B) with Ka, and verifies whether the decrypted ID-A and ID-B are consistent with the plain text of ID-A and ID-B; decrypts Em(ID-A, ID-Bm) with Km, and verifies whether the decrypted ID-A is consistent with the plain text of ID-A, and verifies whether ID-Bm is the identifier of the mailbox server corresponding to ID-B; if the above verifications are all passed (i.e., the ID-A and ID-B acquired by decryption are consistent with the plain text of ID-A and ID-B, and ID-Bm is the identifier of the mailbox server corresponding to ID-B), the parameters acquired through decryption, such as Ra, ID-A and so on are employed to generate a media key Ke2e, and integrity transmission keys Ke2m and Km2e independent from each other, through a media key derivation function (KDF).

In the above, the integrity transmission key Ke2m is the shared key between UE-A and the mailbox server of UE-B; and the integrity transmission key Km2e is the shared key between the mailbox server of UE-B and UE-B.

Step 508, the KMS encrypts the random number Ra, Ke2e and Ke2m with Ka to acquire Ea(Ra, Ke2e,Ke2m); encrypts the Ke2m and Km2e with Km to acquire Em(Ke2m,Km2e); encrypts Ka with a private key Kkms of the KMS to acquire Ekms(Ka); and carries Ea(Ra, Ke2e, Ke2m), Em(Ke2m, Km2e) and Ekms(Ka) in a media key acquisition response and sends the media key acquisition response to the mailbox server of UE-B.

After sending Ekms(Ka) to the mailbox server of UE-B, the KMS can delete Ka.

Step 509, after receiving Ea(Ra, Ke2e, Ke2m), Em(Ke2m, Km2e) and Ekms(Ka), the mailbox server of UE-B sends a call answer (for example, 200 OK message) containing Ea(Ra, Ke2e, Ke2m) to UE-A through the IMS network; stores Ekms(Ka) and previously received ID-A, ID-B, Ea(Ra, ID-A, ID-B) together; and acquires Ke2m and Km2e by decryption.

Step 510, the IMS network sends the 200 OK message containing Ea(Ra, Ke2e, Ke2m) to UE-A, and UE-A acquires the media key Ke2e and the integrity transmission key Ke2m through decrypting Ea(Ra, Ke2e, Ke2m).

Step 11, after acquiring the media key Ke2e, UE-A can securely send media information to the mailbox server of UE-B by using the media key Ke2e. Because the mailbox server of UE-B can not acquire the media key Ke2e, the end-to-end security is ensured.

Moreover, UE-A and the mailbox server of UE-B can utilize the integrity transmission key Ke2m shared by the both parties to realize the mutual authentication and secure data transmission between UE-A and the mailbox server of UE-B. For example, UE-A can employ Ke2m to encrypt ID-A, and send the cipher text after the encryption together with the media information to the mailbox server of UE-B. The mailbox server of UE-B decrypts the above cipher text with Ke2m and compare the decryption result with ID-A. If they are consistent, UE-A is considered as a validated user.

After logging in, UE-B firstly needs to acquire from its mailbox server the security parameters, which include ID-A, ID-B, Ea(ID-A, ID-B) and Ekms(Ka). It can be concluded from these security parameters that there is delay media information from UE-A, thus UE-B interacts with the KMS to acquire the media key.

Fig.6 is the flow chart of the method according to the first embodiment of the present invention in which the receiving party (UE-B) of the media information interacts with the mailbox server of the receiving party of the media information and the KMS to acquire the media key. After the completing of the flow, UE-B acquires a media key Ke2e and an integrity transmission key Km2e. As shown in Fig.6, the method includes:
Step 601, UE-B and the KMS employs the GBA to negotiate to acquire the shared key Kb.

If the GBA manner can not be employed, UE-B can employ other bootstrapping (authentication) manners to negotiate with the KMS to acquire the shared key Kb.

Step 602, UE-B sends a delay media information request to the mailbox server, wherein the request contains the identifier ID-B of UE-B.

Step 603, the mailbox server returns a delay media message response to UE-B, wherein the response contains the following parameters: ID-A, ID-B, Ekms(Ka), Ea(Ra, ID-A, ID-B).

Step 604, UE-B generates a random number Rb.

Step 605, UE-B sends a media key acquisition request to the KMS, wherein the request contains the following parameters: ID-A, ID-B, Ea (Ra, ID-A, ID-B), Ekms(Ka), Eb(Rb, ID-A, ID-B).

In the above, Eb(Rb, ID-A, ID-B) is a cipher text acquired by encrypting Ra, ID-A, ID-B with the shared key Kb.

Step 606, the KMS decrypts Ekms(Ka) with Kkms to acquire Ka; decrypts Ea(Ra, ID-A, ID-B) and Eb(Rb, ID-A, ID-B) with Ka and Kb respectively, and verifies whether the decrypted ID-A and ID-B are consistent with the plain text of ID-A and ID-B; if above verifications are passed (i.e., the ID-A and ID-B acquired by decryption are consistent with the plain text of ID-A and ID-B), the KMS utilizes the random number Ra and ID-A acquired by decryption, to regenerate a media key Ke2e and an integrity transmission key Km2e through a media key derivation function (KDF).

Step 607, the KMS encrypts the random number Rb, the media key Ke2e and the integrity transmission key Km2e with Kb to acquire Eb(Rb, Ke2e, Km2e), and sends a media key acquisition response containing Eb(Rb, Ke2e, Km2e) to UE-B.

Hereto, UE-B can acquire the media key Ke2e and the integrity transmission key Km2e through decrypting Eb(Rb, Ke2e, Km2e), and decrypt the encrypted media information acquired from the mailbox server with the media key Ke2e, thus the end-to-end security is realized. Moreover, the integrity transmission key Km2e can be utilized between UE-B and the mailbox server to realize mutual authentication and security transmission of data between the two parties.

As seen from the above description, in virtue of the method of the present invention, during the process of generation and issue of the media key Ke2e, the KMS also generates the integrity transmission key Ke2m shared between UE-A and the mailbox server of UE-B and the integrity transmission key Km2e shared between the mailbox server of UE-B and UE-B. Moreover, as shown in Fig.7, it is realized to establish the security association between UE-A and UE-B, UE-A and the mailbox server of UE-B, and UE-B and the mailbox server of UE-B.

According to the basic principle of the present invention, above embodiment also includes various alternatives, for example:
(I) in the above embodiment, the KMS encrypts the shared key Ka with Kkms and then sends the encrypted Ka to the mailbox server of UE-B; UE-B acquires the encrypted Ka and returns the encrypted Ka to the KMS; the KMS performs decryption with Kkms to acquire Ka. In other embodiments of the present invention, the KMS can store the shared key Ka. Certainly, when this technical solution is employed, the KMS needs to increase operations for storing and maintaining the shared key Ka, which increases the storage and process load of the KMS.
(II) in the above embodiment, the KMS utilizes the random number Ra generated by UE-A and ID-A as the key generating parameters, to generate Ke2e, Ke2m and Km2e (wherein the random number Ra is transmitted in an encryption way, and stored in the mailbox server of UE-B ), at the same time, the random number Ra is also used as the parameter for preventing replay attack. In other embodiments of the present invention, other parameters generated by the user, or the random number Ra together with other parameters can also be used as the key generating parameters to generate Ke2e, Ke2m and Km2e. Certainly, in order to ensure the secure transmission and storage of the key generating parameters, at least one of the key generating parameters needs to be encrypted with Ka and then is transmitted to and stored in the mailbox server, wherein the parameter(s) generally is the random number generated by UE-A, and/or other parameter(s) having a random number property (for example, timestamp, etc.).
(III) in the above embodiment, after generating the media key and the integrity transmission key, the KMS respectively employs the key shared with UE-A and UE-B to encrypt the media key and the integrity transmission key, and then sends the encrypted media key and integrity transmission key respectively to UE-A and UE-B. In other embodiments of the present invention, the KMS may also employ other secure manners to send the media key and the integrity transmission key.
(IV) in the above embodiment, when generating the media key Ke2e, the KMS also generates the integrity transmission keys Ke2m and Km2e. In other embodiments of the present invention, if there is an integrity protection solution between the mailbox server of the receiving party and the receiving party, Km2e is not required to be generated.

### The Second Embodiment

The above idea of the present invention can also be applied to a ticket-based system (TBS) to realize the above key distribution process.

Fig.8 is the flow chart of the method of key negotiation between the sending party (UE-A) of the media information and the mailbox server of the receiving party (UE-B) of the media information based on the KMS according to the second embodiment of the present invention. After the flow is ended, UE-A acquires the media key Ke2e which is used for encrypting media information, UE-A and the mailbox server of UE-B acquire the integrity transmission key Ke2m shared by the both parties, and the mailbox server of UE-B also acquires the integrity transmission key Km2e shared with UE-B.

Step 801, UE-A and the KMS employ the GBA to negotiate to acquire the shared key Ka.

If the GBA manner can not be employed, UE-A may employ other bootstrapping (authentication) manners to negotiate with the KMS to acquire the shared key Ka.

Step 802, the mailbox server of UE-B and the KMS may employ manners such as GBA, TLS, IPSec, etc. to negotiate with each other to acquire the shared key Km.

The sequential order of Step 801 and Step 802 is not limited herein.

Step 803, UE-A sends a ticket acquisition request to the KMS, wherein the request contains ID-A and ID-B.

Step 804, the KMS generates the media key Ke2e, the integrity transmission key Ke2m and the integrity transmission key Km2e, and stores Ke2e, Ke2m, and Km2e in a ticket encrypted using the private key of the KMS, then carries the ticket and Ea(Ke2e, Ke2m) in a ticket acquisition response and sends the ticket acquisition response to UE-A.

Moreover, the ticket also contains parameters, such as ID-A and ID-B encrypted using the private key of the KMS.

Step 805, UE-A performs decryption with Ka to acquire Ke2e and Ke2m, and sends the ticket to the mailbox server of UE-B.

Step 806, after acquiring the ticket, mailbox server of UE-B submits the ticket to the KMS.

Step 807, after receiving the ticket, the KMS finds that the ticket is sent by the mailbox server and then extracts Ke2m and Km2e from the ticket, and then encrypts Ke2m and Km2e with the shared key Km between the KMS and the mailbox server, to acquire Em(Ke2m, Km2e), and sends Em(Ke2m, Km2e) to the mailbox server.

Step 808, after acquiring the media key Ke2e, UE-A can utilize the media key Ke2e to securely send media information to the mailbox server of UE-B. Because the mailbox server of UE-B can not acquire the media key Ke2e, it is realized to ensure the end-to-end security.

Moreover, UE-A and the mailbox server of UE-B can utilize the integrity transmission key Ke2m shared by the both parties to realize the mutual authentication and secure data transmission between UE-A and the mailbox server of UE-B.

After logging in, UE-B needs to acquire the ticket from its mailbox server to fmd out that there is delay media information from UE-A, and utilizes the ticket to acquire the media key Ke2e from the KMS.

Fig.9 is the flow chart of the method according to the second embodiment of the present invention in which the receiving party (UE-B) of the media information interacts with the mailbox server of the receiving party of the media information and the KMS to acquire the media key. After the flow is ended, UE-B acquires the media key Ke2e and the integrity transmission key Km2e. As shown in Fig.9, the method includes:
Step 901, UE-A and the KMS employs the GBA to negotiate to acquire the shared key Kb.

If the GBA manner can not be employed, UE-B can employ other bootstrapping (authentication) manners to negotiate with the KMS to acquire the shared key Kb.

Step 902, UE-B sends a delay media information request to the mailbox server, wherein the request contains the identifier ID-B of UE-B.

Step 903, the mailbox server returns a delay media information response to UE-B, wherein the response contains the ticket.

Step 904, UE-B sends a media key acquisition request to the KMS, wherein the request contains ID-A, ID-B and the above ticket.

Step 905, the KMS decrypts the received ticket with its private key to acquire an end-to-end media key Ke2e and verifies the identity of UE-B, if the identity of UE-B accord with the identity of the receiving party of the media information defined in the ticket, then encrypts Ke2e and Km2e with Kb to acquire Eb(Ke2e, Km2e), and carries Eb(Ke2e, Km2e) in a media key acquisition response to send it to UE-B.

Hereto, UE-B can acquire the media key Ke2e and the integrity transmission key Km2e by decrypting Eb(Ke2e, Km2e), and decrypt the encrypted media information acquired from the mailbox server with the media key Ke2e, thus end-to-end security is realized. Moreover, the integrity transmission key Km2e can be employed between UE-B and the mailbox server to realize mutual authentication and secure data transmission between them.

Fig.10 is the schematic diagram of the structure of a system for transmitting delay media information in an IP multimedia subsystem according to the embodiment of the present invention. The system includes: a sending party (UE-A) of media information, a receiving party (UE-B) of the media information, a KMS and a mailbox server of UE-B, wherein:
the sending party is configured to send key generating parameters which are at least partly encrypted to the mailbox server, and the mailbox server stores the key generating parameters which are at least partly encrypted and sends the key generating parameters which are at least partly encrypted to the KMS;
the KMS is configured to decrypt, with Ka, parameter(s) encrypted with the Ka in the key generating parameters which are at least partly encrypted, generate a media key Ke2e and an integrity transmission key Ke2m by using all the key generating parameters, send the Ke2e and the Ke2m to the sending party, and send the Ke2m to the mailbox server;
the sending party is also configured to send media information encrypted with the Ke2e to the mailbox server by using the Ke2m;
the receiving party is configured to acquire from the mailbox server the key generating parameters which are at least partly encrypted, and send to the KMS the key generating parameters which are at least partly encrypted;
the KMS is also configured to, after receiving the key generating parameters which are at least partly encrypted sent by the receiving party, decrypt, with the Ka, parameter(s) encrypted with the Ka in the key generating parameters which are at least partly encrypted, regenerate the Ke2e by using all the key generating parameters, and send the generated Ke2e to the receiving party; and
the receiving party is also configured to acquire from the mailbox server the media information which is encrypted with the Ke2e by the sending party, and decrypt the acquired media information with the Ke2e.

Moreover, after receiving the key generating parameters which are at least partly encrypted sent by the mailbox server and decrypting the parameter(s) encrypted with the Ka therein, the KMS also generates the integrity transmission key Km2e by using all the key generating parameters, and sends the Km2e to the mailbox server. After receiving the key generating parameters which are at least partly encrypted sent by the receiving party and decrypting the parameter(s) encrypted with the Ka therein, the KMS also generate the Km2e by using all the key generating parameters, and sends the Km2e to the receiving party. The receiving party acquires from the mailbox server the media information encrypted with Ke2e by the sending party, by using the Km2e, and decrypts the acquired media information with the Ke2e.

Furthermore, the above network elements can also realize the following functions:
the sending party is configured to send a ticket acquisition request to the KMS;
the KMS is configured to, after receiving a ticket acquisition request, generate a media key Ke2e and an integrity transmission key Ke2m, encrypt the Ke2e and the Ke2m with a shared key Ka between the KMS and a sending party, and send a ticket and the Ke2e and Ke2m encrypted with the Ka to the receiving party, wherein the ticket contains the Ke2e and the Ke2m encrypted with a private key of the KMS;
the sending party is also configured to send the ticket to the mailbox server;
the mailbox server is configured to store the ticket and send the ticket to the KMS;
the KMS is also configured to, after receiving the ticket sent by the mailbox server, perform decryption with the private key to acquire the Ke2m contained in the ticket, and send the acquired Ke2m to the mailbox server;
the sending party is configured to send media information encrypted with the Ke2e to the mailbox server by using the Ke2m;
the receiving party is configured to acquire the ticket from the mailbox server, and send the acquired ticket to the KMS;
the KMS is also configured to, after receiving the ticket sent by the sending party, perform decryption with the private key to acquire the Ke2e contained in the ticket, and send the acquired Ke2e to the receiving party;
the receiving party is also configured to acquire from the mailbox server the media information encrypted with the Ke2e by the sending party, and decrypt the acquired media information with the Ke2e.
The specific function of each network element and the message interactive relationship among individual network elements can be found in the description made to the method embodiments shown in Figs.5-6, 8 and 9.

### Industrial Applicability

Compared with the prior art, the present invention establishes an end-to-end security association between the sending party and the receiving party of the media information to encrypt the media information between them, without any need for the KMS to store the media key; at the same time, the security association is also established between the sending party and the mailbox server of the receiving party, and between the mailbox server of the receiving party and the receiving party, to perform an integrity protection and a mutual authentication between them, thus the security transmission of the IMS delay media information can be realized.

## Claims

1. A method for transmitting delay media information in an IP multimedia subsystem, comprising:
a sending party of media information sending (501-504) key generating parameters which are at least partly encrypted to a mailbox server of a receiving party of the media information, and the mailbox server storing the key generating parameters which are at least partly encrypted and sending the key generating parameters which are at least partly encrypted to a key management server, KMS;
the KMS decrypting (507), with a shared key Ka, parameter(s), which is encrypted with the Ka, in the key generating parameters which are at least partly encrypted and which are sent by the mailbox server, to acquire all the key generating parameters, generating a media key Ke2e and an integrity transmission key Ke2m by using all the key generating parameters acquired, sending (507) the Ke2e and the Ke2m to the sending party, and sending the Ke2m to the mailbox server, wherein the Ka is the shared key between the sending party and the KMS;
the sending party sending (511) media information encrypted with the Ke2e to the mailbox server by using the Ke2m;
the receiving party acquiring from the mailbox server the key generating parameters which are at least partly encrypted, and sending to the KMS the key generating parameters which are at least partly encrypted;
the KMS decrypting, with the Ka, parameter(s), which is encrypted with the Ka, in the key generating parameters which are at least partly encrypted and which are sent by the receiving party, to acquire all the key generating parameters, generating the Ke2e by using all the key generating parameters acquired, and sending the generated Ke2e to the receiving party; and
the receiving party acquiring from the mailbox server the media information which is encrypted with the Ke2e by the sending party, and decrypting the acquired media information with the Ke2e.

2. The method according to Claim 1, wherein
after the step of the KMS decrypting, with a shared key Ka, parameter(s), which is encrypted with the Ka, in the key generating parameters which are at least partly encrypted and which are sent by the mailbox server to acquire all the key generating parameters, the method further comprises:
the KMS generating (507) an integrity transmission key Km2e by using all the key generating parameters acquired, and sending the Km2e to the mailbox server;
after the step of the KMS decrypting, with the Ka, parameter(s), which is encrypted with the Ka, in the key generating parameters which are at least partly encrypted and which are sent by the receiving party to acquire all the key generating parameters, the method further comprises:
the KMS generating (507) the Km2e by using all the key generating parameters acquired, and sending the generated Km2e to the receiving party; and
in the step of the receiving party acquiring from the mailbox server the media information which is encrypted with the Ke2e by the sending party, the receiving party acquires, by using the Km2e, from the mailbox server the media information which is encrypted with the Ke2e by the sending party.

3. The method according to Claim 1 or 2, wherein
before the step of sending the Ke2e and the Ke2m to the sending party, the method further comprises: the KMS encrypting (606) the Ka with a private key Kkms, and sending the encrypted Ka to the mailbox server for storing;
in addition to the step of the receiving party acquiring from the mailbox server the key generating parameters which are at least partly encrypted and sending to the KMS the key generating parameters which are at least partly encrypted, the method further comprises:
the mailbox server sending the encrypted Ka to the receiving party, and the receiving party sending the encrypted Ka to the KMS; and
the KMS decrypting, after receiving the encrypted Ka, the encrypted Ka with the Kkms to acquire the Ka.

4. The method according to Claim 1 or 2, wherein
in the step of the sending party of the media information sending to the mailbox server of the receiving party of the media information the key generating parameters which are at least partly encrypted, the sending party carries in a call request message the key generating parameters which are at least partly encrypted to send to the mailbox server the key generating parameters which are at least partly encrypted, wherein the call request message contains identifiers of the sending party and the receiving party;
in the step of the mailbox server storing the key generating parameters which are at least partly encrypted and sending to the KMS the key generating parameters which are at least partly encrypted, the mailbox server carries in a media key acquisition request message the key generating parameters which are at least partly encrypted to send to the KMS the key generating parameters which are at least partly encrypted, wherein the media key acquisition request message contains identifiers of the sending party, the receiving party and the mailbox server;
before the step of generating the media key Ke2e and the integrity transmission key Ke2m, the method further comprises: the KMS receiving the media key acquisition request message, verifying the identifiers of the sending party, the receiving party and the mailbox server, and generating the media key and the integrity transmission key only if the verification is passed.

5. The method according to Claim 4, wherein
the step of sending the Ke2e and the Ke2m to the sending party comprises:
the KMS encrypting the generated Ke2e and Ke2m with the Ka, and sending the encrypted Ke2e and Ke2m to the mailbox server;
the mailbox server carrying the encrypted Ke2e and Ke2m in a call answer message to send the encrypted Ke2e and Ke2m to the sending party; and
the sending party decrypting the encrypted Ke2e and Ke2m with the Ka to acquire the Ke2e and the Ke2m.

6. The method according to Claim 1 or 2, wherein
the parameter(s), which is encrypted with the Ka, in the key generating parameters which are at least partly encrypted comprises: a timestamp and/or a random number generated by the sending party.

7. A method for transmitting delay media information in an IP multimedia system, comprising:
a key management server, KMS, generating (804), after receiving a ticket acquisition request sent by a sending party of media information, a media key Ke2e and an integrity transmission key Ke2m, encrypting the Ke2e and the Ke2m with a shared key Ka between the KMS and the sending party, and sending (804) a ticket and the Ke2e and Ke2m encrypted with the Ka to the sending party, wherein the ticket contains the Ke2e and the Ke2m encrypted with a private key of the KMS;
the sending party sending (805) the ticket to a mailbox server of a receiving party of the media information, the mailbox server storing the ticket and sending the ticket to the KMS; the KMS performing decryption with the private key to acquire the Ke2m contained in the ticket, and sending the acquired Ke2m to the mailbox server;
the sending party sending (808) media information encrypted with the Ke2e to the mailbox server by using the Ke2m;
the receiving party acquiring the ticket from the mailbox server, and sending (805) the acquired ticket to the KMS; the KMS performing decryption with the private key to acquire the Ke2e contained in the ticket, and sending the acquired Ke2e to the receiving party;
the receiving party acquiring from the mailbox server the media information encrypted with the Ke2e by the sending party, and decrypting the acquired media information with the Ke2e.

8. The method according to Claim 7, wherein
before the step of sending the ticket and the Ke2e and Ke2m encrypted with the Ka to the receiving party, the method further comprises: the KMS generating an integrity transmission key Km2e, encrypting the Km2e with the private key and then carrying the encrypted Km2e in the ticket;
after the step of the mailbox server storing the ticket and sending the ticket to the KMS, the method further comprises:
the KMS performing decryption with the private key to acquire the Km2e contained in the ticket, and sending the acquired Km2e to the mailbox server;
after the step of the receiving party acquiring the ticket from the mailbox server and sending the acquired ticket to the KMS, the method further comprises: the KMS performing decryption with the private key to acquire the Km2e contained in the ticket, and sending the acquired Km2e to the receiving party;
in the step of the receiving party acquiring from the mailbox server the media information encrypted with the Ke2e by the sending party, the receiving party acquires, by using the Km2e, from the mailbox server the media information encrypted with the Ke2e by the sending party.

9. A system for transmitting delay media information in an IP multimedia subsystem, comprising: a sending party of media information, a receiving party of the media information, a key management server (KMS) and a mailbox server of the receiving party of the media information, wherein
the sending party is configured to send (501-504) key generating parameters which are at least partly encrypted to the mailbox server;
the mailbox server is configured to store the key generating parameters which are at least partly encrypted and send the key generating parameters which are at least partly encrypted to the KMS;
the KMS is configured to, after receiving key generating parameters which are at least partly encrypted and which are sent by a mailbox server of a receiving party, decrypt (507), with a shared key Ka, parameter(s), which is encrypted with the Ka, in the key generating parameters which are at least partly encrypted, to acquire all the key generating parameters, generate a media key Ke2e and an integrity transmission key Ke2m by using all the key generating parameters acquired, send (507) the Ke2e and the Ke2m to the sending party, and send the Ke2m to the mailbox server, wherein the Ka is the shared key between the sending party and the KMS;
the sending party is also configured to send (511) media information encrypted with the Ke2e to the mailbox server by using the Ke2m;
the receiving party is configured to acquire from the mailbox server the key generating parameters which are at least partly encrypted, and send the key generating parameters which are at least partly encrypted to the KMS;
the KMS is also configured to, after receiving the key generating parameters which are at least partly encrypted and which are sent by the receiving party, decrypt, with the Ka, parameter(s), which is encrypted with the Ka, in the key generating parameters which are at least partly encrypted, to acquire all the key generating parameters, generate the Ke2e by using all the key generating parameters acquired, and send the generated Ke2e to the receiving party;
the receiving party is also configured to acquire from the mailbox server the media information which is encrypted with the Ke2e by the sending party, and decrypt the acquired media information with the Ke2e.

10. A system for transmitting delay media information in an IP multimedia subsystem, comprising: a sending party of media information, a receiving party of the media information, a key management server (KMS) and a mailbox server of the receiving party of the media information, wherein
the sending party is configured to send a ticket acquisition request to the KMS;
the KMS is configured to, after receiving the ticket acquisition request, generate a media key Ke2e and an integrity transmission key Ke2m, encrypt (804) the Ke2e and the Ke2m with a shared key Ka between the KMS and the sending party, and send (804) a ticket and the Ke2e and Ke2m encrypted with the Ka to the receiving party, wherein the ticket contains the Ke2e and the Ke2m encrypted with a private key of the KMS;
the sending party is also configured to send (805) the ticket to the mailbox server;
the mailbox server is configured to store the ticket and send the ticket to the KMS;
the KMS is also configured to, after receiving the ticket sent by the mailbox server, perform decryption with the private key to acquire the Ke2m contained in the ticket, and send the acquired Ke2m to the mailbox server;
the sending party is also configured to send (808) media information encrypted with the Ke2e to the mailbox server by using the Ke2m;
the receiving party is configured to acquire the ticket from the mailbox server, and send (805) the acquired ticket to the KMS;
the KMS is also configured to, after receiving the ticket sent by the sending party, perform decryption with the private key to acquire the Ke2e contained in the ticket, and send the acquired Ke2e to the receiving party;
the receiving party is also configured to acquire from the mailbox server the media information encrypted with the Ke2e by the sending party, and decrypt the acquired media information with the Ke2e.

## Patentansprüche

1. Verfahren zum Übertragen von Media-Verzögerungsinformationen in einem IP-Multimedia-Subsystem, umfassend:
Senden (501-504), seitens eines Media-Informationen-Sendeteils, von zumindest teilweise verschlüsselten Schlüsselerzeugungsparametern an einen Mailbox-Server eines Media-Informationen-Empfangsteils, und, seitens des Mailbox-Servers, Speichern der zumindest teilweise verschlüsselten Schlüsselerzeugungsparameter und Senden der zumindest teilweise verschlüsselten Schlüsselerzeugungsparameter an einen Schlüsselverwaltungsserver, (Key-Management-Server) KMS;
Entschlüsseln (507), seitens des KMS, mit einem gemeinsam genutzten Schlüssel Ka (eines) mit Ka verschlüsselter(n) Parameter(s) in den zumindest teilweise verschlüsselten und von dem Mailbox-Server gesendeten Schlüsselerzeugungsparametern, um alle Schlüsselerzeugungsparameter zu erfassen, Erzeugen eines Media-Schlüssels Ke2e und eines Integritäts-Übertragungsschlüssels Ke2m unter Verwendung aller erfassten Schlüsselerzeugungsparameter, Senden (507) des Ke2e und des Ke2m an den Sendeteil und Senden des Ke2m an den Mailbox-Server, wobei der Ka der gemeinsam genutzte Schlüssel zwischen dem Sendeteil und dem KMS ist;
Senden (511), seitens des Sendeteils, von mit dem Ke2e verschlüsselten Media-Informationen an den Mailbox-Server unter Verwendung des Ke2m;
Erfassen, seitens des Empfangsteils, der zumindest teilweise verschlüsselten Schlüsselerzeugungsparameter von dem Mailbox-Server und Senden der zumindest teilweise verschlüsselten Schlüsselerzeugungsparameter an den KMS;
Entschlüsseln, seitens des KMS, des (der) mit dem Ka verschlüsselten Parameter(s) in den zumindest teilweise verschlüsselten und von dem Empfangsteil gesendeten Schlüsselerzeugungsparametern mit dem Ka, um alle Schlüsselerzeugungsparameter zu erfassen, Erzeugen des Ke2e unter Verwendung aller erfassten Schlüsselerzeugungsparameter und Senden des erzeugten Ke2e an den Empfangsteil; und
Erfassen, seitens des Empfangsteils, der durch den Sendeteil mit dem Ke2e verschlüsselten Media-Informationen von dem Mailbox-Server und Entschlüsseln der erfassten Media-Informationen mit dem Ke2e.

2. Verfahren nach Anspruch 1, wobei
nach dem Schritt, bei dem der KMS mit einem gemeinsam genutzten Schlüssel Ka (einen) mit dem Ka verschlüsselte(n) Parameter in den zumindest teilweise verschlüsselten und von dem Mailbox-Server gesendeten Schlüsselerzeugungsparametern entschlüsselt, um alle Schlüsselerzeugungsparameter zu erfassen, das Verfahren ferner umfasst:
Erzeugen (507), seitens des KMS, eines Integritäts-Übertragungsschlüssels Km2e unter Verwendung aller erfassten Schlüsselerzeugungsparameter und Senden des Km2e an den Mailbox-Server;
nach dem Schritt, bei dem der KMS den (die) mit dem Ka verschlüsselten Parameter in den zumindest teilweise verschlüsselten und von dem Empfangsteil gesendeten Schlüsselerzeugungsparametern mit dem Ka entschlüsselt, um alle Schlüsselerzeugungsparameter zu erfassen, das Verfahren ferner umfasst:
Erzeugen (507), seitens des KMS, des Km2e unter Verwendung aller erfassten Schlüsselerzeugungsparameter und Senden des erzeugten Km2e an den Empfangsteil; und
bei dem Schritt, bei dem der Empfangsteil von dem Mailbox-Server die durch den Sendeteil mit dem Ke2e verschlüsselten Media-Informationen erfasst, der Empfangsteil unter Verwendung des Km2e von dem Mailbox-Server die durch den Sendeteil mit dem Ke2e verschlüsselten Media-Informationen erfasst.

3. Verfahren nach Anspruch 1 oder 2, wobei
vor dem Schritt des Sendens des Ke2e und des Ke2m an den Sendeteil das Verfahren ferner umfasst: Verschlüsseln (606), seitens des KMS, des Ka mit einem privaten Schlüssel Kkms und Senden des verschlüsselten Ka an den Mailbox-Server zum Speichern;
zusätzlich zu dem Schritt, bei dem der Empfangsteil von dem Mailbox-Server die zumindest teilweise verschlüsselten Schlüsselerzeugungsparameter erfasst und die zumindest teilweise verschlüsselten Schlüsselerzeugungsparameter an den KMS sendet, das Verfahren ferner umfasst:
Senden, seitens des Mailbox-Servers, des verschlüsselten Ka an den Empfangsteil und Senden, seitens des Empfangsteils, des verschlüsselten Ka an den KMS; und
Entschlüsseln, seitens des KMS, nach Empfangen des verschlüsselten Ka, des verschlüsselten Ka mit dem Kkms, um den Ka zu erfassen.

4. Verfahren nach Anspruch 1 oder 2, wobei
bei dem Schritt, in dem der Media-Informationen-Sendeteil die zumindest teilweise verschlüsselten Schlüsselerzeugungsparameter an den Mailbox-Sever des Media-Informationen-Empfangsteils sendet, der Sendeteil in einer Rufanforderungsnachricht die zumindest teilweise verschlüsselten Schlüsselerzeugungsparameter trägt, um die zumindest teilweise verschlüsselten Schlüsselerzeugungsparameter an den Mailbox-Server zu senden, wobei die Rufanforderungsnachricht Kennungen des Sendeteils und des Empfangsteils enthält;
bei dem Schritt, bei dem der Mailbox-Server die zumindest teilweise verschlüsselten Schlüsselerzeugungsparameter speichert und die zumindest teilweise verschlüsselten Schlüsselerzeugungsparameter an den KMS sendet, der Mailbox-Server in einer Media-Schlüsselerfassungs-Anforderungsnachricht die zumindest teilweise verschlüsselten Schlüsselerzeugungsparameter trägt, um die zumindest teilweise verschlüsselten Schlüsselerzeugungsparameter an den KMS zu senden, wobei die Media-Schlüsselerfassungs-Anforderungsnachricht Kennungen des Sendeteils, des Empfangsteils und des Mailbox-Servers enthält;
vor dem Schritt des Erzeugens des Media-Schlüssels Ke2e und des Integritäts-Übertragungsschlüssels Ke2m das Verfahren ferner umfasst:
Empfangen, seitens des KMS, der Media-Schlüsselerfassungs-Anforderungsnachricht, Verifizieren der Kennungen des Sendeteils, des Empfangsteils und des Mailbox-Servers und Erzeugen des Media-Schlüssels und des Integritäts-Übertragungsschlüssels nur dann, wenn die Verifikation durchlaufen ist.

5. Verfahren nach Anspruch 4, wobei:
der Schritt des Sendes des Ke2e und des Ke2m an den Sendeteil umfasst:
Verschlüsseln, seitens des KMS, des erzeugten Ke2e und des erzeugten Ke2m mit dem Ka und Senden des verschlüsselten Ke2e und des verschlüsselten Ke2m an den Mailbox-Server;
Tragen, seitens des Mailbox-Servers, des verschlüsselten Ke2e und des verschlüsselten Ke2m in einer Rufantwortnachricht, um den verschlüsselten Ke2e und den verschlüsselten Ke2m an den Sendeteil zu senden; und
Entschlüsseln, seitens des Sendeteils, des verschlüsselten Ke2e und des verschlüsselten Ke2m mit dem Ka, um den Ke2e und den Ke2e zu erfassen.

6. Verfahren nach Anspruch 1 oder 2, wobei
der (die) mit dem Ka verschlüsselte(n) Parameter in den zumindest teilweise verschlüsselten Schlüsselerzeugungsparametern umfasst: eine von dem Sendeteil erzeugte Zeitmarke und/oder Zufallszahl.

7. Verfahren zum Übertragen von Media-Verzögerungsinformationen in einem IP-Multimedia-System, umfassend:
Erzeugen (804), seitens eines Schlüsselverwaltungsservers, Key-Management-Server KMS, nach Empfangen einer von einem Media-Informationen-Sendeteils gesendeten Ticket-Erfassungsanforderung eines Media-Schlüssels Ke2e und eines Integritäts-Übertragungsschlüssels Ke2m, Verschlüsseln des Ke2e und des Ke2m mit einem zwischen dem KMS und dem Sendeteil gemeinsam genutzten Schlüssel Ka und Senden (804) eines Tickets und des mit dem Ka verschlüsselten Ke2e und des mit dem Ka verschlüsselten Ke2m an den Sendeteil, wobei das Ticket den mit einem privaten Schlüssel des KMS verschlüsselten Ke2e und den mit einem privaten Schlüssel des KMS verschlüsselten Ke2m enthält;
Senden (805), seitens des Sendeteils, des Tickets an einen Mailbox-Server eines Media-Informationen-Empfangsteils, Speichern, seitens des Mailbox-Servers, des Tickets und Senden des Tickets an den KMS; Ausführen, seitens des KMS, der Entschlüsselung mit dem privaten Schlüssel, um den in dem Ticket enthaltenen Ke2m zu erfassen, und Senden des erfassten Ke2m an den Mailbox-Server;
Senden (808), seitens des Sendeteils, von mit dem Ke2e verschlüsselten Media-Informationen an den Mailbox-Server unter Verwendung des Ke2m;
Erfassen, seitens des Empfangsteils, des Tickets von dem Mailbox-Server und Senden (805) des erfassten Tickets an den KMS; Durchführen, seitens des KMS, der Entschlüsselung mit dem privaten Schlüssel, um den in dem Ticket enthaltenen Ke2e zu erfassen, und Senden des erfassten Ke2e an den Empfangsteil;
Erfassen, seitens des Empfangsteils, der durch den Sendeteil mit dem Ke2e verschlüsselten Media-Informationen von dem Mailbox-Server und Entschlüsseln der erfassten Media-Informationen mit dem Ke2e.

8. Verfahren nach Anspruch 7, wobei
vor dem Schritt des Sendens des Tickets und des mit dem Ka verschlüsselten Ke2e und des mit dem Ka verschlüsselten Ke2m an den Empfangsteil das Verfahren ferner enthält: Erzeugen, seitens des KMS, eines Integritäts-Übertragungsschlüssels Km2e, Verschlüsseln des Km2e mit dem privaten Schlüssel und dann Tragen des verschlüsselten Km2e in dem Ticket;
nach dem Schritt, bei dem der Mailbox-Server das Ticket speichert und das Ticket an den KMS sendet, das Verfahren ferner umfasst:
Durchführen, seitens des KMS, der Entschlüsselung mit dem privaten Schlüssel, um den in dem Ticket enthaltenen Km2e zu erfassen, und Senden des erfassten Km2e an den Mailbox-Server;
nach dem Schritt, bei dem der Empfangsteil das Ticket von dem Mailbox-Server erfasst und das erfasste Ticket an den KMS sendet, das Verfahren ferner umfasst: Durchführen seitens des KMS der Entschlüsselung mit dem privaten Schlüssel, um den in dem Ticket enthaltenen Km2e zu erfassen und Senden des erfassten Km2e an den Empfangsteil;
bei dem Schritt, bei dem der Empfangsteil die durch den Sendeteil mit dem Ke2e verschlüsselten Media-Informationen von dem Mailbox-Server erfasst, der Empfangsteil unter Verwendung des Km2e von dem Mailbox-Server die durch den Sendeteil mit dem Ke2e verschlüsselten Media-Informationen erfasst.

9. System zum Übertagen von Media-Verzögerungsinformationen in einem IP-Multimedia-Subsystem, umfassend: einen Media-Informationen-Sendeteil, einen Media-Informationen-Empfangsteil, einen Schlüsselverwaltungsserver (Key-Management-Server, KMS) und einen Mailbox-Server des Media-Informationen-Empfangsteils, wobei
der Sendeteil dafür konfiguriert, zumindest teilweise verschlüsselte Schlüsselerzeugungsparameter an den Mailbox-Server zu senden (501-504);
der Mailbox-Server dafür konfiguriert ist, die zumindest teilweise verschlüsselten Schlüsselerzeugungsparameter zu speichern und die zumindest teilweise verschlüsselten Schlüsselerzeugungsparameter an den KMS zu senden;
der KMS dafür konfiguriert ist, nach Empfangen von Schlüsselerzeugungsparametern, welche zumindest teilweise verschlüsselt sind und welche von einem Mailbox-Server eines Empfangsteils gesendet sind, mit einem gemeinsam genutzten Schlüssel Ka (einen) Parameter, welcher mit dem Ka verschlüsselt ist, in den zumindest teilweise verschlüsselten Schlüsselerzeugungsparametern zu entschlüsseln (507), um alle Schlüsselerzeugungsparameter zu erfassen, unter Verwendung aller erfassten Schlüsselerzeugungsparameter einen Media-Schlüssel Ke2e und einen Integritäts-Übertragungsschlüssel Ke2m zu erzeugen, den Ke2e und den Ke2m an den Sendeteil zu senden (507) und den Ke2m an den Mailbox-Server zu senden, wobei der Ka der gemeinsam genutzte Schlüssel zwischen dem Sendeteil und dem KMS ist;
der Sendeteil auch dafür konfiguriert ist, mit dem Ke2e verschlüsselte Media-Informationen unter Verwendung des Ke2m an den Mailbox-Server zu senden (511);
der Empfangsteil dafür konfiguriert ist, von dem Mailbox-Server die zumindest teilweise verschlüsselten Schlüsselerzeugungsparameter zu erfassen und die zumindest teilweise verschlüsselten Schlüsselerzeugungsparameter an den KMS zu senden;
der KMS auch dafür konfiguriert ist, nach Empfangen der Schlüsselerzeugungsparameter, die zumindest teilweise verschlüsselt sind und die von dem Empfangsteil gesendet sind, mit dem Ka (den) Parameter, welcher mit dem Ka verschlüsselt ist, in den zumindest teilweise verschlüsselten Schlüsselerzeugungsparameter zu entschlüsseln, um alle Schlüsselerzeugungsparameter zu erfassen, unter Verwendung aller erfassten Schlüsselerzeugungsparameter den Ke2e zu erzeugen und den erzeugten Ke2e an den Empfangsteil zu senden;
der Empfangsteil auch dafür konfiguriert ist, von dem Mailbox-Server die durch den Sendeteil mit dem Ke2e verschlüsselten Media-Informationen zu erfassen und die erfassten Media-Informationen mit dem Ke2e zu entschlüsseln.

10. System zum Übertagen von Media-Verzögerungsinformationen in einem IP-Multimedia-Subsystem, umfassend: einen Media-Informationen-Sendeteil, einen Media-Informationen-Empfangsteil, einen Schlüsselverwaltungsserver (Key-Management-Server, KMS) und einen Mailbox-Server des Media-Informationen-Empfangsteils, wobei
der Sendeteil dafür konfiguriert ist, eine Ticket-Erfassungsanforderung an den KMS zu senden;
der KMS dafür konfiguriert ist, nach Empfangen der Ticket-Erfassungsanforderung einen Media-Schlüssel Ke2e und einen Integritäts-Übertragungsschlüssel Ke2m zu erzeugen, den Ke2e und den Ke2m mit einem zwischen dem KMS und dem Sendeteil gemeinsam genutzten Schlüssel Ka zu verschlüsseln (804) und ein Ticket sowie den mit dem Ka verschlüsselten Ke2e und den mit dem Ka verschlüsselten Ke2m an den Empfangsteil zu senden (804), wobei das Ticket den mit einem privaten Schlüssel des KMS verschlüsselten Ke2e und den mit einem privaten Schlüssel des KMS verschlüsselten Ke2m enthält;
der Sendeteil auch dafür konfiguriert ist, das Ticket an den Mailbox-Server zu senden (805);
der Mailbox-Server dafür konfiguriert ist, das Ticket zu speichern und das Ticket an den KMS zu senden;
der KMS auch dafür konfiguriert ist, nach Empfangen des von dem Mailbox-Server gesendeten Tickets die Entschlüsselung mit dem privaten Schlüssel auszuführen, um den in dem Ticket enthaltenen Ke2m zu erfassen, und den erfassten Ke2m an den Mailbox-Server zu senden;
der Sendeteil auch dafür konfiguriert ist, mit dem Ke2e verschlüsselte Media-Informationen unter Verwendung des Ke2m an den Mailbox-Server zu senden (808);
der Empfangsteil dafür konfiguriert ist, das Ticket von dem Mailbox-Server zu erfassen und das erfasste Ticket an den KMS zu senden (805);
der KMS auch dafür konfiguriert ist, nach Empfangen des von dem Sendeteil gesendeten Tickets die Entschlüsselung mit dem privaten Schlüssel auszuführen, um den in dem Ticket enthaltenen Ke2e zu erfassen und den erfassten Ke2e an den Empfangsteil zu senden;
der Empfangsteil auch dafür konfiguriert ist, von dem Mailbox-Server die durch den Sendeteil mit dem Ke2e verschlüsselten Media-Informationen zu erfassen und die erfassten Media-Informationen mit dem Ke2e zu entschlüsseln.

## Revendications

1. Procédé de transmission d'informations multimédias de retard dans un sous-système multimédia IP, comprenant :
une partie d'envoi d'informations multimédias envoyant (501-504) des paramètres de génération de clé qui sont au moins partiellement cryptés à un serveur de boîte aux lettres électronique d'une partie de réception des informations multimédias, et le serveur de boîte aux lettres électronique stockant les paramètres de génération de clé qui sont au moins partiellement cryptés et envoyant les paramètres de génération de clé qui sont au moins partiellement cryptés à un serveur de gestion de clé, KMS ;
le KMS décryptant (507), avec une clé partagée Ka, un(des) paramètre(s), qui est(sont) crypté(s) avec la Ka, dans les paramètres de génération de clé qui sont au moins partiellement cryptés et qui sont envoyés par le serveur de boîte aux lettres électronique, pour obtenir tous les paramètres de génération de clé, générant une clé multimédia Ke2e et une clé de transmission d'intégrité Ke2m en utilisant tous les paramètres de génération de clé obtenus, envoyant (507) la Ke2e et la Ke2m à la partie d'envoi, et envoyant la Ke2m au serveur de boîte aux lettres électronique, dans lequel la Ka est la clé partagée entre la partie d'envoi et le KMS ;
la partie d'envoi envoyant (511) des informations multimédia cryptées avec la Ke2e au serveur de boîte aux lettres électronique en utilisant la ke2m ;
la partie de réception obtenant, en provenance du serveur de boîte aux lettres électronique, les paramètres de génération de clé qui sont au moins partiellement cryptés, et envoyant au KMS les paramètres de génération de clé qui sont au moins partiellement cryptés ;
le KMS décryptant, avec la Ka, un(des) paramètre(s), qui est(sont) crypté(s) avec la Ka, dans les paramètres de génération de clé qui sont au moins partiellement cryptés et qui sont envoyés par la partie de réception, pour obtenir tous les paramètres de génération de clé, générant la Ke2e en utilisant tous les paramètres de génération de clé obtenus, et envoyant la Ke2e générée à la partie de réception ; et
la partie de réception obtenant, en provenance du serveur de boîte aux lettres électronique, les informations multimédias qui sont cryptées avec la ke2e par la partie d'envoi, et décryptant les informations multimédias obtenues avec la Ke2e.

2. Procédé selon la revendication 1, dans lequel après l'étape du KMS décryptant, avec une clé partagée Ka, un(des) paramètre(s), qui est(sont) crypté(s) avec la Ka, dans les paramètres de génération de clé qui sont au moins partiellement cryptés et qui sont envoyés par le serveur de boîte aux lettres électronique pour obtenir tous les paramètres de génération de clé, le procédé comprend en outre :
le KMS générant (507) une clé de transmission d'intégrité Km2e en utilisant tous les paramètres de génération de clé obtenus, et envoyant la Km2e au serveur de boîte aux lettres électronique ;
après l'étape du KMS décryptant, avec la Ka, un(des) paramètre(s), qui est(sont) crypté (s) avec la Ka, dans les paramètres de génération de clé qui sont au moins partiellement cryptés et qui sont envoyés par la partie de réception pour obtenir tous les paramètres de génération de clé, le procédé comprend en outre :
le KMS générant (507) la Km2e en utilisant tous les paramètres de génération de clé obtenus, et envoyant la Km2e générée à la partie de réception ; et
à l'étape de la partie de réception obtenant, en provenance du serveur de boîte aux lettres électronique, les informations multimédias qui sont cryptées avec la Ke2e par la partie d'envoi, la partie de réception obtient, en utilisant la Km2e, en provenance du serveur de boîte aux lettres électronique, les informations multimédias qui sont cryptées avec la Ke2e par la partie d'envoi.

3. Procédé selon la revendication 1 ou 2, dans lequel
avant l'étape de l'envoi de la Ke2e et de la Ke2m à la partie d'envoi, le procédé comprend en outre : le KMS cryptant (606) la Ka avec une clé privée Kkms, et envoyant la Ka cryptée au serveur de boîte aux lettres électronique pour stockage ;
en plus de l'étape de l'obtention, par la partie de réception, en provenance du serveur de boîte aux lettres électronique, des paramètres de génération de clé qui sont au moins partiellement cryptées et de l'envoi au KMS des paramètres de génération de clé qui sont au moins partiellement cryptées, le procédé comprend en outre :
le serveur de boîte aux lettres électronique envoyant la Ka cryptée à la partie de réception, et la partie de réception envoyant la Ka cryptée au KMS ; et
le KMS décryptant, après réception de la Ka cryptée, la Ka cryptée avec la Kkms pour obtenir la Ka.

4. Procédé selon la revendication 1 ou 2, dans lequel
à l'étape de l'envoi, par la partie d'envoi des informations multimédias, au serveur de boîte aux lettres électronique de la partie de réception des informations multimédias, des paramètres de génération de clé qui sont au moins partiellement cryptés, la partie d'envoi transporte dans un message de demande d'appel les paramètres de génération de clé qui sont au moins partiellement cryptés pour envoyer au serveur de boîte aux lettres électronique les paramètres de génération de clé qui sont au moins partiellement cryptés, dans lequel le message de demande d'appel contient des identifiants de la partie d'envoi et de la partie de réception ;
à l'étape du stockage, par le serveur de boîte aux lettres électronique, des paramètres de génération de clé qui sont au moins partiellement cryptés et de l'envoi au KMS des paramètres de génération de clé qui sont au moins partiellement cryptés, le serveur de boîte aux lettres électronique transporte dans un message de demande d'obtention de clé multimédia les paramètres de génération de clé qui sont au moins partiellement cryptés pour envoyer au KMS les paramètres de génération de clé qui sont au moins partiellement cryptés, dans lequel le message de demande d'obtention de clé multimédia contient des identifiants de la partie d'envoi, de la partie de réception et du serveur de boîte aux lettres électronique ;
avant l'étape de la génération de la clé multimédia Ke2e et de la clé de transmission d'intégrité Ke2m, le procédé comprend en outre : le KMS recevant le message de demande d'obtention de clé multimédia, vérifiant les identifiants de la partie d'envoi, de la partie de réception et du serveur de boîte aux lettres électronique et générant la clé multimédia et la clé de transmission d'intégrité uniquement si la vérification est réussie.

5. Procédé selon la revendication 4, dans lequel l'étape de l'envoi de la Ke2e et de la Ke2m à la partie d'envoi comprend :
le KMS cryptant les Ke2e et Ke2m générées avec la Ka, et envoyant les Ke2e et Ke2m cryptées au serveur de boîte aux lettres électronique ;
le serveur de boîte aux lettres électronique transportant les Ke2e et Ke2m cryptées dans un message de réponse d'appel pour envoyer les Ke2e et Ke2m cryptées à la partie d'envoi ; et
la partie d'envoi décryptant les Ke2e et Ke2m cryptées avec la Ka pour obtenir les Ke2e et Ke2m.

6. Procédé selon la revendication 1 ou 2, dans lequel
le (s) paramètre(s), qui est(sont) crypté(s) avec la Ka, dans les paramètres de génération de clé qui sont au moins partiellement cryptés comprend(comprennent) : une estampille temporelle et/ou un numéro aléatoire généré par la partie d'envoi.

7. Procédé de transmission d'informations multimédias de retard dans un système multimédia IP, comprenant :
un serveur de gestion de clé, KMS, générant (804), après réception d'une demande d'obtention de ticket envoyée par une partie d'envoi d'informations multimédias, une clé multimédia Ke2e et une clé de transmission d'intégrité Ke2m, cryptant la Ke2e et la Ke2m avec une clé Ka partagée entre le KMS et la partie d'envoi, et envoyant (804) un ticket et les Ke2e et Ke2m cryptées avec la Ka à la partie d'envoi, dans lequel le ticket contient la Ke2e et la Ke2m cryptées avec une clé privée du KMS ;
la partie d'envoi envoyant (805) le ticket au serveur de boîte aux lettres électronique d'une partie de réception des informations multimédias, le serveur de boîte aux lettres électronique stockant le ticket et envoyant le ticket au KMS ; le KMS effectuant un décryptage avec la clé privée pour obtenir la Ke2m contenue dans le ticket, et envoyant la Ke2m obtenue au serveur de boîte aux lettres électronique ;
la partie d'envoi envoyant (808) des informations multimédias cryptées avec la Ke2e au serveur de boîte aux lettres électronique en utilisant la Ke2m ;
la partie de réception obtenant le ticket provenant du serveur de boîte aux lettres électronique, et envoyant (805) le ticket obtenu au KMS ; le KMS effectuant un décryptage avec la clé privée pour obtenir la Ke2e contenue dans le ticket, et envoyant la Ke2e obtenue à la partie de réception ;
la partie de réception obtenant, en provenance du serveur de boîte aux lettres électronique, les informations multimédias cryptées avec la Ke2e par la partie d'envoi, et décryptant les informations multimédia obtenues avec la Ke2e.

8. Procédé selon la revendication 7, dans lequel avant l'étape d'envoi du ticket et des Ke2e et Ke2m cryptées avec la Ka à la partie de réception, le procédé comprend en outre : le KMS générant une clé de transmission d'intégrité Km2e, cryptant la Km2e avec la clé privée puis transportant la Km2e cryptée dans la ticket ;
après l'étape du serveur de boîte aux lettres électronique stockant le ticket et envoyant le ticket au KMS, le procédé comprend en outre :
le KMS effectuant un décryptage avec la clé privée pour obtenir la Km2e contenue dans le ticket, et envoyant la Km2e obtenue au serveur de boîte aux lettres électronique ;
après l'étape de la partie de réception obtenant le ticket en provenance du serveur de boîte aux lettres électronique et envoyant le ticket obtenu au KMS, le procédé comprend en outre : le KMS effectuant un décryptage avec la clé privée pour obtenir la Km2e contenue dans le ticket, et envoyant la Km2e obtenue à la partie de réception ;
à l'étape de la partie de réception obtenant, en provenance du serveur de boîte aux lettres électronique, les informations multimédias cryptées avec la Ke2e par la partie d'envoi, la partie de réception obtient, en utilisant la Km2e, en provenance du serveur de boîte aux lettres électronique, les informations multimédias cryptées avec la Ke2e par la partie d'envoi.

9. Système de transmission d'informations multimédias de retard dans un sous-système multimédia IP, comprenant : une partie d'envoi d'informations multimédias, une partie de réception des informations multimédias, un serveur de gestion de clé (KMS) et un serveur de boîte aux lettres électronique de la partie de réception des informations multimédias, dans lequel
la partie d'envoi est configurée pour envoyer (501-504) des paramètres de génération de clé qui sont au moins partiellement cryptés au serveur de boîte aux lettres électronique ;
le serveur de boîte aux lettres électronique est configuré pour stocker les paramètres de génération de clé qui sont au moins partiellement cryptés et pour envoyer les paramètres de génération de clé qui sont au moins partiellement cryptés au KMS ;
le KMS est configuré pour, après réception des paramètres de génération de clé qui sont au moins partiellement cryptés et qui sont envoyés par un serveur de boîte aux lettres électronique d'une partie de réception, décrypter (507), avec une clé partagée Ka, un(des) paramètre(s), qui est(sont) crypté(s) avec la Ka, dans les paramètres de génération de clé qui sont au moins partiellement cryptés, afin d'obtenir tous les paramètres de génération de clé, générer une clé multimédia Ke2e et une clé de transmission d'intégrité Ke2m en utilisant tous les paramètres de génération de clé obtenus, envoyer (507) la Ke2e et la Ke2m à la partie d'envoi, et envoyer la Ke2m au serveur de boîte aux lettres électronique, dans lequel la ka est la clé partagée entre la partie d'envoi et le KMS ;
la partie d'envoi est également configurée pour envoyer (511) des informations multimédias cryptées avec la Ke2e au serveur de boîte aux lettres électronique en utilisant la Ke2m ;
la partie de réception est configurée pour obtenir, en provenance du serveur de boîte aux lettres électronique les paramètres de génération de clé qui sont au moins partiellement cryptés, et pour envoyer les paramètres de génération de clé qui sont au moins partiellement cryptés au KMS ;
le KMS est également configuré pour, après réception des paramètres de génération de clé qui sont au moins partiellement cryptés et qui sont envoyés par la partie de réception, décrypter, avec la Ka, un(des) paramètre(s), qui est(sont) crypté(s) avec la Ka, dans les paramètres de génération de clé qui sont au moins partiellement cryptés, afin d'obtenir tous les paramètres de génération de clé, générer la Ke2e en utilisant tous les paramètres de génération de clé obtenus et envoyer la Ke2e générée à la partie de réception ;
la partie de réception est également configurée pour obtenir en provenance du serveur de boîte aux lettres électronique les informations multimédias qui sont cryptées avec la Ke2e par la partie d'envoi, et décrypter les informations multimédias obtenues avec la Ke2e.

10. Système de transmission d'informations multimédias de retard dans un sous-système multimédia IP, comprenant : une partie d'envoi d'informations multimédias, une partie de réception des informations multimédias, un serveur de gestion de clé (KMS) et un serveur de boîte aux lettres électronique de la partie de réception des informations multimédias, dans lequel
la partie d'envoi est configurée pour envoyer une demande d'acquisition de ticket au KMS ;
le KMS est configuré pour, après réception de la demande d'acquisition de ticket, générer une clé multimédia Ke2e et une clé de transmission d'intégrité Ke2m, crypter (804) la Ke2e et la Ke2m avec une clé partagée Ka entre le KMS et la partie d'envoi, et envoyer (804) un ticket et les Ke2e et Ke2m cryptées avec la Ka à la partie de réception, dans lequel le ticket contient la Ke2e et la Ke2m cryptées avec une clé privée du KMS ;
la partie d'envoi est également configurée pour envoyer (805) le ticket au serveur de boîte aux lettres électronique ;
le serveur de boîte aux lettres électronique est configuré pour stocker le ticket et envoyer le ticket au KMS ;
le KMS est également configuré pour, après réception du ticket envoyé par le serveur de boîte aux lettres électronique, effectuer un décryptage avec la clé privée afin d'obtenir la Ke2m contenue dans le ticket, et envoyer la Ke2m obtenue au serveur de boîte aux lettres électronique ;
la partie d'envoi est également configurée pour envoyer (808) des informations multimédias cryptées avec la Ke2e au serveur de boîte aux lettres électronique en utilisant la Ke2m ;
la partie de réception est configurée pour obtenir le ticket provenant du serveur de boîte aux lettres électronique, et envoyer (805) le ticket obtenu au KMS ;
le KMS est également configuré pour, après réception du ticket envoyé par la partie d'envoi, effectuer un décryptage avec la clé privée afin d'obtenir la Ke2e contenue dans le ticket, et envoyer la Ke2e obtenue à la partie de réception ;
la partie de réception est également configurée pour obtenir en provenance du serveur de boîte aux lettres électronique les informations multimédias cryptées avec la Ke2e par la partie d'envoi, et décrypter les informations multimédias obtenues avec la Ke2e.
